# EUROPEAN PATENT APPLICATION

(11) **EP 4 410 569 A1**
(43) Date of publication of application: **07.08.2024**
(21) Application number: 24152628.4
(22) Date of filing: 18.01.2024
(51) Int. Cl.: B60C 15/00, B60C 15/06, B60C 11/02

(54) **PNEUMATIC TIRE**

(30) Priority: 06.02.2023 JP 2023016312
(71) Applicant: Sumitomo Rubber Industries, Ltd., Kobe-shi, Hyogo 651-0072 (JP)
(72) Inventor: IWASHITA, Takeru, Kobe-shi, 651-0072 (JP)
(74) Representative: Manitz Finsterwald Patent- und Rechtsanwaltspartnerschaft mbB

(57) **Abstract**

According to the present invention, the number of times of retreading can be increased. A pneumatic tire 1 includes bead portions 4 and a carcass ply 6A. In a tire meridian cross-section, each bead portion 4 includes a first position P1 where a tire axial direction line Y1 passing through an outermost position Re, in a tire radial direction, of a rim flange Rj of a standardized rim R intersects an outer surface 4s of the bead portion 4, and a first bead thickness L1 which corresponds to the length of a perpendicular line n1 drawn from the first position P1 to a tire inner cavity surface 1b. The carcass ply 6A is located on the tire inner cavity surface 1b side with respect to a midpoint C1 of the perpendicular line n1 defining the first bead thickness L1.

## Description

### BACKGROUND OF THE INVENTION

### Field of the Invention

The present invention relates to a pneumatic tire.

### Background Art

In Japanese Laid-Open Patent Publication No. 2011-235783, a retreaded tire in which a new tread rubber is adhered to a base tire obtained by removing a tread rubber from a used tire, is described.

In recent years, in order to achieve the Sustainable Development Goals (SDGs), the number of times of adhering a tread rubber (the number of times of retreading) in a case of retreading a tire (tread rubber) has been required to be increased.

The present invention has been made in view of the above circumstances, and a main object of the present invention is to provide a pneumatic tire capable of increasing the number of times of retreading for tread rubber.

### SUMMARY OF THE INVENTION

The present invention is directed to a pneumatic tire which includes a tread portion, a pair of sidewall portions, a pair of bead portions in each of which a bead core is embedded, a carcass extending between the pair of bead portions, and an inner liner disposed inward of the carcass and defining a tire inner cavity surface. The carcass includes at least one carcass ply, and the carcass ply includes a body portion extending between the bead cores of the pair of bead portions, and turned-up portions turned up around the bead cores, respectively, from an inner side toward an outer side in a tire axial direction and extending in a tire radial direction. In a tire meridian cross-section in a standardized state where the tire is fitted on a standardized rim and inflated to a standardized internal pressure and no load is applied to the tire, each of the pair of bead portions includes a first position where a tire axial direction line passing through an outermost position, in the tire radial direction, of a rim flange of the standardized rim intersects an outer surface of the bead portion, and a first bead thickness which corresponds to a length of a perpendicular line drawn from the first position to the tire inner cavity surface. The carcass ply is located on the tire inner cavity side with respect to a midpoint of the perpendicular line defining the first bead thickness.

The pneumatic tire of the present invention has the above-described structure, and therefore, the number of times of retreading for tread rubber can be increased.

### BRIEF DESCRIPTION OF THE DRAWINGS

FIG. 1 is a tire meridian cross-sectional view of a pneumatic tire according to one embodiment of the present invention;
FIG. 2 is an enlarged view of a bead portion in the right portion of FIG. 1; and
FIG. 3 is another enlarged view of the bead portion in the right portion of FIG. 1.

### DETAILED DESCRIPTION

Hereinafter, an embodiment of the present invention will be described with reference to the drawings. The drawings contain exaggerated expressions and expressions that differ from the dimensional ratio of the actual structure in order to help the understanding of the present invention. In addition, when there are a plurality of embodiments, the same or common elements are denoted by the same reference characters throughout the description, and the redundant description thereof is omitted.

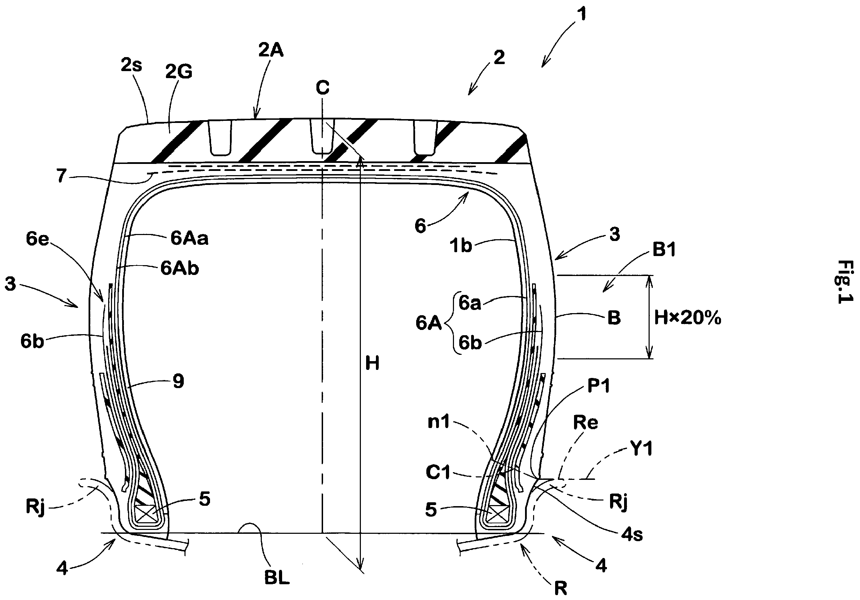

FIG. 1 is a tire meridian cross-sectional view, including a tire rotation axis (not shown), of a pneumatic tire 1 (hereinafter, may be simply referred to as "tire 1") according to one embodiment of the present invention. The tire 1 of the present embodiment is suitably used for a small-sized truck, for example. However, the present invention is also applicable to the tire 1 for a passenger car or a heavy-duty vehicle, for example.

In FIG. 1, the tire 1 in a standardized state is shown. In the case of a pneumatic tire for which various standards are defined, the "standardized state" is a state where the tire 1 is fitted on a standardized rim R and inflated to a standardized internal pressure and no load is applied to the tire. In the case of a tire for which various standards are not defined, the standardized state means a standard use state, corresponding to the purpose of use of the tire, where the tire is not mounted on a vehicle and no load is applied to the tire. In the present description, unless otherwise specified, dimensions and the like of components of the tire are values measured in the standardized state.

The "standardized rim R" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

As shown in FIG. 1, the tire 1 includes a tread portion 2, a pair of sidewall portions 3, and a pair of bead portions 4. Each sidewall portion 3 is continuous with an outer side, in a tire axial direction, of the tread portion 2, and extends in a tire radial direction. Each bead portion 4 is continuous with an inner side, in the tire radial direction, of the sidewall portion 3, and has a bead core 5 embedded therein.

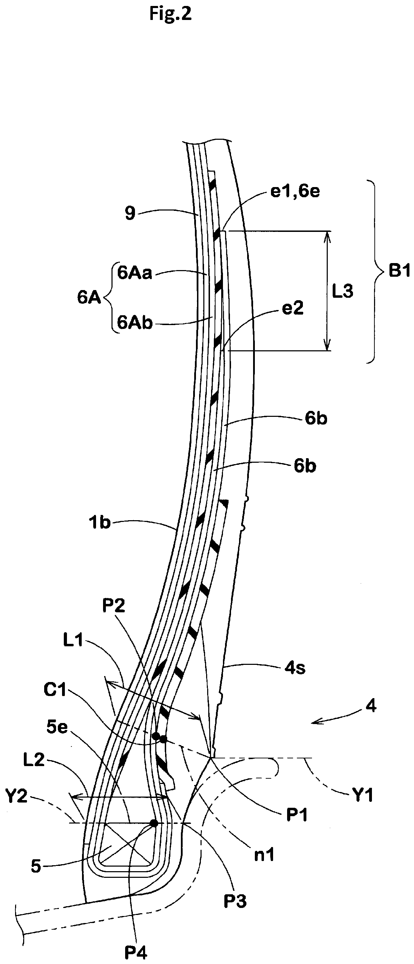

FIG. 2 is an enlarged view of the bead portion 4 in the right portion of FIG. 1. As shown in FIG. 1 and FIG. 2, each of the pair of bead portions 4 includes a first position P1 and a first bead thickness L1. The first position P1 is a position where a tire axial direction line Y1 passing through an outermost position Re, in the tire radial direction, of a rim flange Rj of the standardized rim R intersects an outer surface 4s of the bead portion 4. The first bead thickness L1 corresponds to the length of a perpendicular line (normal line to a tire inner cavity surface 1b) n1 drawn from the first position P1 to the tire inner cavity surface 1b. In general, a portion around the first position P1 is a portion which is likely to be largely bent due to a compressive load and on which stress is likely to be concentrated, at the time of vulcanization molding.

In addition, each of the bead portions 4 includes a third position P3 and a second bead thickness L2, for example. The third position P3 is a position where a tire axial direction line Y2 passing through an outermost position 5e, in the tire radial direction, of the bead core 5 intersects the outer surface 4s of the bead portion 4. The second bead thickness L2 corresponds to the length of the tire axial direction line Y2 drawn from the third position P3 to the tire inner cavity surface 1b.

The tire 1 includes a carcass 6 extending between the pair of bead portions 4, and an inner liner 9 disposed inward of the carcass 6 and defining the tire inner cavity surface 1b. The tire 1 of the present embodiment further includes a tread rubber 2G, and a belt layer 7 located between the tread rubber 2G and the carcass 6, in the tread portion 2. The tread rubber 2G includes a ground-contact surface 2s which comes into contact with a road surface. The carcass 6 is tightened by the belt layer 7, thereby enhancing the stiffness of the tread portion 2. The inner liner 9 is formed of air-impermeable rubber, and serves to maintain the internal pressure. The tread rubber 2G, the belt layer 7, and the inner liner 9 are, for example, formed of known materials.

The carcass 6 includes at least one carcass ply 6A. The carcass ply 6A includes a body portion 6a extending between the bead cores 5 of the pair of bead portions 4, and turned-up portions 6b turned up around the bead cores 5, respectively, from an inner side toward an outer side in the tire axial direction and extending in the tire radial direction. The carcass ply 6A including such turned-up portions 6b increases tension between the bead cores 5 and 5, thereby improving the durability of the tire 1.

The carcass ply 6A is located on the tire inner cavity surface 1b side with respect to a midpoint C1 of the perpendicular line n1 defining the first bead thickness L1. Accordingly, the carcass ply 6A is disposed in a region where the compressive load is relatively small, and thus, stress which acts on the carcass ply 6A is reduced and occurrence of damage, breakage, or the like due to strain is inhibited, at the time of vulcanization molding.

In order to effectively exert such an effect, it is preferable that the carcass ply 6A is located at a second position P2 away from the first position P1 by 60% of the first bead thickness L1 on the perpendicular line n1, or is located on the tire inner cavity surface 1b side with respect to the second position P2 on the perpendicular line n1.

The carcass ply 6A is, for example, formed by covering an array of carcass cords with topping rubber (not shown). To the carcass cords, for example, organic fibers such as polyester fibers, nylon fibers, rayon fibers, polyethylene naphthalate fibers, and aramid fibers, or steel are applied, and in particular, polyester fibers are preferably applied. Occurrence of breakage or the like is likely to be caused by a compressive load rather than by a tensile load in the carcass cords, for example. The topping rubber is formed of a known material.

In the present embodiment, the carcass ply 6A includes two carcass plies 6Aa, 6Ab respectively disposed on an inner side and an outer side in the tire radial direction. Each of the carcass plies 6Aa, 6Ab includes the body portion 6a and the turned-up portions 6b. Such a carcass 6 can further inhibit damage to the bead portion 4 or the like. In the present embodiment, each turned-up portion 6b of the inner carcass ply 6Aa is located on the tire inner cavity surface 1b side with respect to the midpoint C1 of the perpendicular line n1 defining the first bead thickness L1. Accordingly, damage or the like which occurs in the carcass ply 6A is effectively inhibited.

An outer end 6e, in the tire radial direction, of the turned-up portion 6b is located away from a bead base line BL, by 40% or more of a tire cross-sectional height H (see FIG. 1), toward the outer side in the tire radial direction, for example. Accordingly, the outer end 6e is largely away from the first position P1, and thus the stiffness of the bead portion 4 is enhanced and the durability is improved. Also, in consideration of inhibiting an excessive increase in the mass of the tire 1, the outer end 6e of the turned-up portion 6b is located away from the bead base line BL toward the outer side in the tire radial direction, more preferably by 45% or more of the tire cross-sectional height H, and preferably by 80% or less of the tire cross-sectional height H and more preferably by 70% or less of the tire cross-sectional height H. A portion B1 around a tire maximum width position B is a region where the concentration of stress is particularly alleviated at the time of vulcanization molding. Thus, the outer end 6e of the turned-up portion 6b is preferably located in the portion B 1 around the tire maximum width position B. In the present embodiment, an outer end e1 of the inner carcass ply 6Aa and an outer end e2 of the outer carcass ply 6Ab are located away from the bead base line BL, by 40% or more of the tire cross-sectional height H, toward the outer side in the tire radial direction, and are located in the portion B 1 around the tire maximum width position B. The outer end e1 is an outer end, in the tire radial direction, of the turned-up portion 6b of the inner carcass ply 6Aa. The outer end e2 is an outer end, in the tire radial direction, of the turned-up portion 6b of the outer carcass ply 6Ab.

In the description herein, the tire maximum width position B is a height position, in the tire radial direction, of the outer surface of the tire 1 for defining a tire cross-sectional width (see JATMA or the like). In the description herein, the portion B 1 around the tire maximum width position B has the tire maximum width position B at the center and extends, from the center, outward by 10% or less of the tire cross-sectional height H and inward by 10% or less of the tire cross-sectional height H in the tire radial direction. In the description herein, the tire cross-sectional height H is a distance from the bead base line BL to a tire maximum diameter position in the tire radial direction. In the description herein, the bead base line BL is a tire axial direction line passing through a rim diameter position of the standardized rim R.

The outer end e1 of the turned-up portion 6b of the inner carcass ply 6Aa is located outward of the outer end e2 of the turned-up portion 6b of the outer carcass ply 6Ab, in the tire radial direction. A distance L3, in the tire radial direction, between the outer end e1 of the inner carcass ply 6Aa and the outer end e2 of the outer carcass ply 6Ab is, but is not particularly limited to, preferably not less than 5% of the tire cross-sectional height H and more preferably not less than 7% of the tire cross-sectional height H, and preferably not more than 15% of the tire cross-sectional height H and more preferably not more than 13% of the tire cross-sectional height H. The outer end e1 of the inner carcass ply 6Aa may be located inward of the outer end e2 of the outer carcass ply 6Ab, in the tire radial direction.

Further, it is preferable that the carcass ply 6A is located at a fourth position P4 away from the third position P3 by 30% of the second bead thickness L2, or is located on the outer surface 4s side of the bead portion 4 with respect to the fourth position P4. In this case, the carcass ply 6A is formed in an arc shape projecting inward in the tire axial direction in a portion near the first position P1, and thus stress can be reduced at the time of vulcanization molding. In the present embodiment, the turned-up portion 6b of the outer carcass ply 6Ab is located on the outer surface 4s side with respect to the fourth position P4. If the carcass ply 6A is located excessively on the outer surface 4s side, stress from the rim flange Rj greatly acts during running, thereby increasing the risk of damage or breakage.

As shown in FIG. 1, the tread rubber 2G is a tread rubber 2A obtained through retreading. The tire 1 having this tread rubber 2A is produced in a manner in which a new tread rubber 2A is adhered to a base tire (not shown) obtained by removing the tread rubber the lifespan of which has ended, and the obtained product is subjected to vulcanization molding with a mold which has a known structure, and such a tire is referred to as retreaded tire or recapped tire. In addition, the tread rubber 2G may be a tread rubber (not shown) obtained through retreading multiple times. Thus, when the tread rubber 2A is adhered to the base tire and vulcanization molding is performed thereon, strain due to stress which acts on the carcass ply 6A is reduced, occurrence of damage, breakage, or the like is inhibited, the number of times of retreading for the tread rubber 2G can be increased, and therefore the present invention is suitable for a retreaded tire.

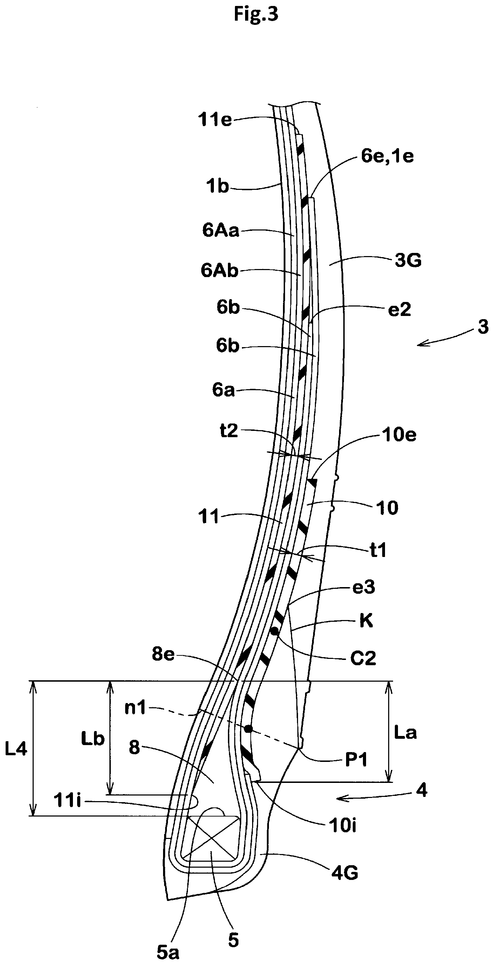

FIG. 3 is an enlarged view of the bead portion 4 in the right portion of FIG. 1. As shown in FIG. 3, in the present embodiment, each bead portion 4 includes a sidewall rubber 3G, an apex rubber 8, a first reinforcing rubber 10, and a second reinforcing rubber 11. The first reinforcing rubber 10 is adjacent to an outer side, in the tire axial direction, of the turned-up portion 6b, for example. In the present embodiment, the first reinforcing rubber 10 is adjacent to the outer side, in the tire axial direction, of the turned-up portion 6b of the inner carcass ply 6Aa. The apex rubber 8 extends from an outer surface 5a, in the tire radial direction, of the bead core 5, outward in the tire radial direction, for example. The sidewall rubber 3G is disposed outward of the first reinforcing rubber 10 in the tire axial direction, for example. The second reinforcing rubber 11 is located between the apex rubber 8 and the body portion 6a of the carcass ply 6A, for example. In the present embodiment, the second reinforcing rubber 11 is located between the apex rubber 8 and the body portion 6a of the outer carcass ply 6Ab. The second reinforcing rubber 11 is located between the body portion 6a and the turned-up portion 6b of the outer carcass ply 6Ab, for example.

The first reinforcing rubber 10 is preferably formed such that a complex elastic modulus E*1 at 70°C of the first reinforcing rubber 10 is more than a complex elastic modulus E*2 at 70°C of the sidewall rubber 3G. Accordingly, the sidewall rubber 3G having the relatively small complex elastic modulus E*2 can reduce repeated deformation when being in contact and non-contact with the ground during running, whereby stress which acts on the first position P1 can be reduced. In addition, the first reinforcing rubber 10 having the relatively large complex elastic modulus E* 1 enhances the stiffness of the bead portion 4, thereby improving durability.

In order to effectively exert such an effect, the complex elastic modulus E* 1 of the first reinforcing rubber 10 is preferably not less than 4 times the complex elastic modulus E*2 of the sidewall rubber 3G and more preferably not less than 5 times the complex elastic modulus E*2 of the sidewall rubber 3G, and preferably not more than 17 times the complex elastic modulus E*2 of the sidewall rubber 3G and more preferably not more than 8 times the complex elastic modulus E*2 of the sidewall rubber 3G. The complex elastic modulus E*1 at 70°C of the first reinforcing rubber 10 is preferably not less than 15 MPa and more preferably not less than 20 MPa, and preferably not more than 45 MPa and more preferably not more than 40 MPa, for example.

In the description herein, the complex elastic modulus is a value measured according to the standards of JIS-K6394 under the conditions indicated below, using a dynamic viscoelasticity measuring device (EPLEXOR series) manufactured by GABO.
Initial strain: 5%
Amplitude of dynamic strain: ±1%
Frequency: 10 Hz
Deformation mode: tension
Measurement temperature: 70°C

The material of the second reinforcing rubber 11 is the same as that of the topping rubber of the carcass ply 6A, for example. A complex elastic modulus E*3 at 70°C of the second reinforcing rubber 11 is preferably less than the complex elastic modulus E*1 at 70°C of the first reinforcing rubber 10. Accordingly, the effect of inhibiting deformation can be exerted by the first reinforcing rubber 10, and the effect of absorbing strain of the turned-up portion 6b of the outer carcass ply 6Ab and strain of the turned-up portion 6b of the inner carcass ply 6Aa to improve durability can be further exerted by the second reinforcing rubber 11.

The first reinforcing rubber 10 extends inward and outward of an outer end 8e in the tire radial direction of the apex rubber 8, in the tire radial direction, for example. In addition, the second reinforcing rubber 11 extends inward and outward of the outer end 8e of the apex rubber 8, in the tire radial direction, for example. Accordingly, variation in stiffness on an inner side and an outer side, in the tire radial direction, of the outer end 8e of the apex rubber 8 can be reduced, and thus deformation of the bead portion 4 can be inhibited at the time of vulcanization molding.

An outer end 10e, in the tire radial direction, of the first reinforcing rubber 10 is located inward of the outer end 6e in the tire radial direction of the turned-up portion 6b, in the tire radial direction, for example. In addition, an outer end 11e, in the tire radial direction, of the second reinforcing rubber 11 is located outward of the outer end 6e in the tire radial direction of the turned-up portion 6b, in the tire radial direction, for example. Accordingly, variation in stiffness can be reduced in the bead portion 4 and the sidewall portion 3 in the tire radial direction, and thus a large reduction in durability can be inhibited. In the present embodiment, the outer end 10e of the first reinforcing rubber 10 is located inward of the outer end e2 of the turned-up portion 6b of the outer carcass ply 6Ab, in the tire radial direction. The outer end 11e of the second reinforcing rubber 11 is located outward of the outer end e1 of the turned-up portion 6b of the inner carcass ply 6Aa, in the tire radial direction. Such a second reinforcing rubber 11 inhibits the body portion 6a and the turned-up portion 6b from coming into contact with each other, thereby effectively inhibiting damage to the carcass ply 6A or the like at the time of vulcanization molding.

An inner end 10i, in the tire radial direction, of the first reinforcing rubber 10, and an inner end 11i, in the tire radial direction, of the second reinforcing rubber 11 are located between the outer surface 5a of the bead core 5 and the first position P1. Accordingly, stiffness in a portion around the first position P1 can be increased, and thus the durability of the bead portion 4 can be enhanced.

The first reinforcing rubber 10 and the second reinforcing rubber 11 are each formed as a rubber layer including no cord, for example. Such a first reinforcing rubber 10 and such a second reinforcing rubber 11 reduce occurrence of damage or the like due to contact with the carcass cords, thereby contributing to further increasing the number of times of retreading for the tread rubber G.

A maximum thickness t1 of the first reinforcing rubber 10 is larger than a maximum thickness t2 of the second reinforcing rubber 11. Accordingly, at the time of vulcanization molding, deformation of the bead portion 4 due to compressive strain can be reduced, and thus the durability of the bead portion 4 can be improved. The maximum thickness t2 of the second reinforcing rubber 11 is preferably not smaller than 0.3 mm and more preferably not smaller than 0.5 mm, and preferably not larger than 2.0 mm and more preferably not larger than 1.5 mm. In addition, a difference (t1-t2) between the maximum thickness t1 of the first reinforcing rubber 10 and the maximum thickness t2 of the second reinforcing rubber 11 is preferably not smaller than 0.2 mm and more preferably not smaller than 0.5 mm, and preferably not larger than 3 mm and more preferably not larger than 2.5 mm.

An overlap length La, in the tire radial direction, of the first reinforcing rubber 10 and the apex rubber 8 is, but is not particularly limited to, preferably not smaller than 9 mm and more preferably not smaller than 14 mm, and preferably not larger than 30 mm and more preferably not larger than 25 mm. An overlap length Lb, in the tire radial direction, of the second reinforcing rubber 11 and the apex rubber 8 is preferably not smaller than 3 mm and more preferably not smaller than 8 mm, and preferably not larger than 30 mm and more preferably not larger than 25 mm.

The apex rubber 8 extends to the outer side in the tire radial direction with respect to the first position P1 in the present embodiment. The basic stiffness at the first position P1 is enhanced by such an apex rubber 8. The outer end 8e of the apex rubber 8 extends inward and outward of the perpendicular line n1 in the tire radial direction, for example. The apex rubber 8 is formed of a known material.

A length L4, in the tire radial direction, of the apex rubber 8 is, but is not particularly limited to, preferably not less than 5% of the tire cross-sectional height H and more preferably not less than 10% of the tire cross-sectional height H, and preferably not more than 25% of the tire cross-sectional height H and more preferably not more than 20% of the tire cross-sectional height H.

In addition, each bead portion 4 of the present embodiment includes a clinch rubber 4G adjacent to an inner side, in the tire radial direction, of the sidewall rubber 3G. Thus, a boundary surface K, at which the sidewall rubber 3G and the clinch rubber 4G are in contact with each other, is formed in the bead portion 4. The clinch rubber 4G is formed of a known material.

The boundary surface K is connected to the first position P1 in the present embodiment. The boundary surface K is inclined from the first position P1, outward in the tire radial direction and inward in the tire axial direction, and is connected to the first reinforcing rubber 10, for example. An outer end e3, in the tire radial direction, of the boundary surface K is located outward of the outer end 8e of the apex rubber 8 in the tire radial direction, for example. In addition, the outer end e3 of the boundary surface K is located inward of the outer end 10e of the first reinforcing rubber 10, in the tire radial direction in the present embodiment.

Although one embodiment of the present invention has been described in detail above, the present invention is not limited to the above specific embodiment, and various modifications can be made to implement the present invention.

### EXAMPLES

Tires each having the basic structure in FIG. 1 with a size of 205/85R16LT were produced as test tires on the basis of specifications in Table 1. The durability of each test tire was tested. Specifications common to the test tires, and a testing method are as follows.
Rim on which the tire was mounted: 16×5.5J
Tire internal pressure: 600 kPa

### <Durability>

Running with each test tire under the following conditions was performed using a bench test device, and then the tester made sensory evaluation for the damaged state of the carcass at the bead portions. The results are indicated as scores with the result of Example 1 being regarded as 100. A higher value indicates that the results are better.
Load: 16.79 kN
Speed: 80 km/h
Running distance: 20000 km
E*2: 24 MPa (the same among Examples and Comparative Example)

The position "A" of the carcass ply means that the carcass ply was at a position away from the first position P1, by 50% of the first bead thickness L1, toward the tire inner cavity surface side on the perpendicular line n1.

The position "B" of the carcass ply means that the carcass ply was at a position away from the first position P1, by 60% of the first bead thickness L1, toward the tire inner cavity surface side on the perpendicular line n1.

The position "C" of the carcass ply means that the carcass ply was at a position away from the first position P1, by 55% of the first bead thickness L1, toward the tire inner cavity surface side on the perpendicular line n1.

The position of the outer end 6e of the turned-up portion means a distance, in the tire radial direction, between the bead base line and the outer end e1 of the turned-up portion 6b of the inner carcass ply 6Aa / tire cross-sectional height H. The results of the test are shown in Table 1.

**[Table 1]**

| | Comp. Ex. 1 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|
| L4/H (%) | 15 | 5 | 15 | 25 | 30 | 15 | 15 | 15 | 15 | 15 |
| Position of carcass ply | A | B | B | C | B | B | B | B | B | B |
| E*1/E*2 | 6 | 4 | 6 | 5 | 6 | 2 | 6 | 6 | 6 | 6 |
| t2 (mm) | 1 | 0.3 | 1 | 2 | 1 | 1 | 0.1 | 1 | 1 | 1 |
| Position of outer end 6e of turned-up portion (%) | 55 | 40 | 55 | 80 | 55 | 55 | 55 | 30 | 55 | 55 |
| La (mm) | 20 | 9 | 20 | 30 | 20 | 20 | 20 | 20 | 4 | 20 |
| Lb (mm) | 20 | 3 | 20 | 30 | 20 | 20 | 20 | 20 | 20 | 1 |
| Durability [score: higher value is better] | 88 | 100 | 110 | 100 | 105 | 105 | 100 | 95 | 95 | 100 |

As shown in Table 1, it is confirmed that Examples have improved durability compared to Comparative Example. Therefore, the results indicate that the tires of Examples can increase the number of times of retreading for tread rubber, compared to the tire of Comparative Example. It is proven that safe traveling is ensured with each of the tires of all Examples, even if retreading is performed for the tread rubber.

### [Additional Note]

The present invention includes the following aspects.

### [Present Invention 1]

A pneumatic tire, including:
a tread portion;
a pair of sidewall portions;
a pair of bead portions in each of which a bead core is embedded;
a carcass extending between the pair of bead portions; and
an inner liner disposed inward of the carcass and defining a tire inner cavity surface, in which
the tread portion includes a tread rubber,
the tread rubber is a tread rubber obtained through retreading,
the carcass includes at least one carcass ply,
the carcass ply includes a body portion extending between the bead cores of the pair of bead portions, and turned-up portions turned up around the bead cores, respectively, from an inner side toward an outer side in a tire axial direction and extending in a tire radial direction,
in a tire meridian cross-section in a standardized state where the tire is fitted on a standardized rim and inflated to a standardized internal pressure and no load is applied to the tire, each of the pair of bead portions includes a first position where a tire axial direction line passing through an outermost position, in the tire radial direction, of a rim flange of the standardized rim intersects an outer surface of the bead portion, and a first bead thickness which corresponds to a length of a perpendicular line drawn from the first position to the tire inner cavity surface, and
the carcass ply is located on the tire inner cavity surface side with respect to a midpoint of the perpendicular line defining the first bead thickness.

### [Present Invention 2]

The pneumatic tire according to Present Invention 1, in which
the tread rubber is a tread rubber obtained through retreading multiple times.

### [Present Invention 3]

The pneumatic tire according to Present Invention 1 or 2, in which
the carcass ply is located at a second position away from the first position by 60% of the first bead thickness on the perpendicular line, or is located on the tire inner cavity surface side with respect to the second position.

### [Present Invention 4]

The pneumatic tire according to any one of Present Inventions 1 to 3, in which
each of the pair of bead portions includes a first reinforcing rubber adjacent to an outer side, in the tire axial direction, of the turned-up portion, and a sidewall rubber disposed outward of the first reinforcing rubber in the tire axial direction, and
a complex elastic modulus at 70°C of the first reinforcing rubber is more than a complex elastic modulus at 70°C of the sidewall rubber.

### [Present Invention 5]

The pneumatic tire according to any one of Present Inventions 1 to 4, in which
an outer end, in the tire radial direction, of the turned-up portion is located away from a bead base line, by 40% or more of a tire cross-sectional height, toward an outer side in the tire radial direction.

### [Present Invention 6]

The pneumatic tire according to any one of present inventions 1 to 5, in which
each of the pair of bead portions includes an apex rubber extending from an outer surface in the tire radial direction of the bead core, outward in the tire radial direction, and a second reinforcing rubber located between the apex rubber and the body portion of the carcass ply.

### [Present Invention 7]

The pneumatic tire according to Present Invention 6, in which
the second reinforcing rubber extends inward and outward of an outer end in the tire radial direction of the apex rubber, in the tire radial direction.

### [Present Invention 8]

The pneumatic tire according to Present Invention 6 or 7, in which
an outer end, in the tire radial direction, of the second reinforcing rubber is located outward of an outer end in the tire radial direction of the turned-up portion, in the tire radial direction.

### [Present Invention 9]

The pneumatic tire according to any one of Present Inventions 6 to 8, in which
each of the pair of bead portions includes a first reinforcing rubber adjacent to an outer side, in the tire axial direction, of the turned-up portion, and
the first reinforcing rubber extends inward and outward of an outer end in the tire radial direction of the apex rubber, in the tire radial direction.

### [Present Invention 10]

The pneumatic tire according to Present Invention 9, in which
an outer end, in the tire radial direction, of the first reinforcing rubber is located inward of an outer end in the tire radial direction of the turned-up portion, in the tire radial direction.

### [Present Invention 11]

The pneumatic tire according to any one of Present Inventions 1 to 10, in which
each of the pair of bead portions includes a third position where a tire axial direction line passing through an outermost position, in the tire radial direction, of the bead core intersects the outer surface of the bead portion, and a second bead thickness which corresponds to a length of the tire axial direction line drawn from the third position to the tire inner cavity surface, and
the carcass ply is located at a fourth position away from the third position by 30% of the second bead thickness, or is located on the outer surface side of the bead portion with respect to the fourth position.

## Claims

1. A pneumatic tire (1), comprising:
a tread portion (2);
a pair of sidewall portions (3);
a pair of bead portions (4) in each of which a bead core (5) is embedded;
a carcass (6) extending between the pair of bead portions (4); and
an inner liner (9) disposed inward of the carcass (6) and defining a tire inner cavity surface (1b), wherein
the tread portion (2) includes a tread rubber (2G),
the tread rubber (2G) is a tread rubber (2A) obtained through retreading,
the carcass (6) includes at least one carcass ply (6A),
the carcass ply (6A) includes a body portion (6a) extending between the bead cores (5) of the pair of bead portions (4), and turned-up portions (6b) turned up around the bead cores (5), respectively, from an inner side toward an outer side in a tire axial direction and extending in a tire radial direction,
in a tire meridian cross-section in a standardized state where the tire (1) is fitted on a standardized rim (R) and inflated to a standardized internal pressure and no load is applied to the tire (1), each of the pair of bead portions (4) includes a first position (P1) where a tire axial direction line (Y1) passing through an outermost position (Re), in the tire radial direction, of a rim flange (Rj) of the standardized rim (R) intersects an outer surface (4s) of the bead portion (4), and a first bead thickness (L1) which corresponds to a length of a perpendicular line (n1) drawn from the first position (P1) to the tire inner cavity surface (1b), and
the carcass ply (6A) is located on the tire inner cavity surface (1b) side with respect to a midpoint (C1) of the perpendicular line (n1) defining the first bead thickness (L1).

2. The pneumatic tire (1) according to claim 1, wherein the tread rubber (2G) is a tread rubber obtained through retreading multiple times.

3. The pneumatic tire (1) according to claim 1 or 2, wherein the carcass ply (6A) is located at a second position (P2) away from the first position (P1) by 60% of the first bead thickness (L1) on the perpendicular line (n1), or is located on the tire inner cavity surface (1b) side with respect to the second position (P2).

4. The pneumatic tire (1) according to any one of claims 1 to 3, wherein
each of the pair of bead portions (4) includes a first reinforcing rubber (10) adjacent to an outer side, in the tire axial direction, of the turned-up portion (6b), and a sidewall rubber (3G) disposed outward of the first reinforcing rubber (10) in the tire axial direction, and
a complex elastic modulus (E*1) at 70°C of the first reinforcing rubber (10) is more than a complex elastic modulus (E*2) at 70°C of the sidewall rubber (3G).

5. The pneumatic tire (1) according to any one of claims 1 to 4, wherein an outer end (6e), in the tire radial direction, of the turned-up portion (6b) is located away from a bead base line (BL), by 40% or more of a tire cross-sectional height (H), toward an outer side in the tire radial direction.

6. The pneumatic tire (1) according to any one of claims 1 to 5, wherein each of the pair of bead portions (4) includes an apex rubber (8) extending from an outer surface (5a) in the tire radial direction of the bead core (5), outward in the tire radial direction, and a second reinforcing rubber (11) located between the apex rubber (8) and the body portion (6a) of the carcass ply (6A).

7. The pneumatic tire (1) according to claim 6, wherein the second reinforcing rubber (11) extends inward and outward of an outer end (8e) in the tire radial direction of the apex rubber (8), in the tire radial direction.

8. The pneumatic tire (1) according to claim 6 or 7, wherein an outer end (11e), in the tire radial direction, of the second reinforcing rubber (11) is located outward of an outer end (6e) in the tire radial direction of the turned-up portion (6b), in the tire radial direction.

9. The pneumatic tire (1) according to any one of claims 6 to 8, wherein
each of the pair of bead portions (4) includes a first reinforcing rubber (10) adjacent to an outer side, in the tire axial direction, of the turned-up portion (6b), and
the first reinforcing rubber (10) extends inward and outward of an outer end (8e) in the tire radial direction of the apex rubber (8), in the tire radial direction.

10. The pneumatic tire (1) according to claim 9, wherein an outer end (10e), in the tire radial direction, of the first reinforcing rubber (10) is located inward of an outer end (6e) in the tire radial direction of the turned-up portion (6b), in the tire radial direction.

11. The pneumatic tire (1) according to any one of claims 1 to 10, wherein
each of the pair of bead portions (4) includes a third position (P3) where a tire axial direction line (Y2) passing through an outermost position (5e), in the tire radial direction, of the bead core (5) intersects the outer surface (4s) of the bead portion (4), and a second bead thickness (L2) which corresponds to a length of the tire axial direction line (Y2) drawn from the third position (P3) to the tire inner cavity surface (1b), and
the carcass ply (6A) is located at a fourth position (P4) away from the third position (P3) by 30% of the second bead thickness (L2), or is located on the outer surface (4s) side of the bead portion (4) with respect to the fourth position (P4).
